(19)

Europäisches Patentamt
European Patent Office
Office européen des brevets

(11) **EP 3 745 112 B1**

(12) **EUROPEAN PATENT SPECIFICATION**

(45) Date of publication and mention
of the grant of the patent:
**23.08.2023 Bulletin 2023/34**

(21) Application number: **20176352.1**

(22) Date of filing: **25.05.2020**

(51) International Patent Classification (IPC):
**G01N 21/21** (2006.01)    **G02B 5/30** (2006.01)
**G02B 5/04** (2006.01)

(52) Cooperative Patent Classification (CPC):
**G01N 21/211; G02B 5/3083;** G01N 2021/212;
G01N 2021/213; G02B 5/04

(54) **ROTATING-COMPENSATOR ELLIPSOMETER**

ELLIPSOMETER MIT ROTIERENDEM KOMPENSATOR

ELLIPSOMÈTRE À COMPENSATEUR ROTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2019 HU 1900183**

(43) Date of publication of application:
**02.12.2020 Bulletin 2020/49**

(73) Proprietor: **Semilab Zrt.
1117 Budapest (HU)**

(72) Inventor: **MAKAI, László
H-2230 Gyömr (HU)**

(74) Representative: **Danubia Patent & Law Office LLC
Bajcsy-Zsilinszky út 16
1051 Budapest (HU)**

(56) References cited:
**US-A- 4 917 461**

• **DEN BOER J H W G ET AL: "Spectroscopic
rotating compensator ellipsometry in the
infrared: retarder design and measurement",
MEASUREMENT SCIENCE AND TECHNOLOGY,
IOP, BRISTOL, GB, vol. 8, no. 5, 1997, pages
484-492, XP020064239, ISSN: 0957-0233, DOI:
10.1088/0957-0233/8/5/004**

• **STANISLAVCHUK T N ET AL: "Synchrotron
radiation-based far-infrared spectroscopic
ellipsometer with full Mueller-matrix capability",
REVIEW OF SCIENTIFIC INSTRUMENTS, AIP,
MELVILLE, NY, US, vol. 84, no. 2, 5 February 2013
(2013-02-05), pages 23901-1-23901-15,
XP012174583, ISSN: 0034-6748, DOI:
10.1063/1.4789495 [retrieved on 2013-02-05]**

• **KANG T D ET AL: "Rotatable broadband retarders
for far-infrared spectroscopic ellipsometry",
THIN SOLID FILMS, ELSEVIER, AMSTERDAM,
NL, vol. 519, no. 9, 21 December 2010
(2010-12-21), pages 2698-2702, XP028161968,
ISSN: 0040-6090, DOI: 10.1016/J.TSF.2010.12.057
[retrieved on 2010-12-21]**

• **J. M. BENNETT: "A Critical Evaluation of
Rhomb-Type Quarterwave Retarders", APPLIED
OPTICS, vol. 9, no. 9, September 1970 (1970-09),
pages 2123-2129, XP055253175, US ISSN:
0003-6935, DOI: 10.1364/AO.9.002123**

• **AZZAM R M A AND HOWLADER M M K:
"Silicon-Based Polarization Optics for the 1.30
and 1.55 m Communication Wavelengths",
JOURNAL OF LIGHTWAVE TECHNOLOGY, IEEE,
USA, vol. 14, no. 5, May 1996 (1996-05), pages
873-878, XP011028486, ISSN: 0733-8724**

EP 3 745 112 B1

## Description

The present invention relates to spectroscopic ellipsometry, particularly to a rotating-compensator ellipsometer.

Ellipsometers measure the reflection of light with different polarization directions from a sample, thus allowing the determination of the thin film structure of the surface of the sample via the complex reflection properties thereof. Ellipsometry is a non-destructive testing method with high precision. Even layers of only a monoatomic thickness can be studied by ellipsometry, even during the process of deposition.

Ellipsometry methods are usually differentiated on the basis of the number of wavelengths used for measurement, i.e. is so-called single-wavelength ellipsometry and spectroscopic ellipsometry. The measurements may be limited to a single point of the sample or it can extend to an area of the sample. Spectroscopic ellipsometry comprises carrying out the measurement on a large number of wavelengths in small increments within a relatively wide wavelength range. Imaging ellipsometry comprises scanning an area of the sample from point to point, or imaging it to a 2D detector, usually to a CCD.

An ellipsometer comprises at least the following elements in the light path in this order: a light source, a first polarizer that transmits a component of the light of the light source having a specific polarization state, a sample to be analyzed, a second polarizer (i.e. an analyzer) that transmits a component of light having a specific polarization state, and finally a detector. The sample is not part of the ellipsometer per se, it is merely arranged therein for the measurement. In order to study different polarization components, the polarizer and the analyzer can be rotated, or in an ellipsometer with higher precision, the polarization is varied by one or more further elements, e.g. a photoelastic modulator or a rotating compensator.

The US Patent No. 9,404,872 discloses a rotating-compensator ellipsometer, wherein the rotating compensator is formed by an optical element comprising a birefringent material, particularly a plan-parallel plate made of a birefringent material, i.e. a so-called waveplate.

The effect of birefringent materials on the polarization is highly dependent on the wavelength of the light and thus compensators comprising birefringent materials limit the spectral range that can be used in a spectroscopic ellipsometer, which is disadvantageous for measurements.

The US Patent No. 7,298,480 discloses a rotating-compensator ellipsometer, wherein the compensator is a special prism. The light passing through the prism is subjected to four or more total internal reflections with high angle of incidence. An advantage of providing the phase shift between the s and p polarization components via total internal reflection versus birefringent materials is that the phase shift is less dependent on the wavelength, therefore such a compensator is substantially achromatic and can be used in a wider wavelength range. Such a prism may be formed by arranging two Fresnel rhombs symmetrically after one another or from several members of different shapes.

Using such prisms as a rotating compensator requires a particularly robust and thus expensive rotation mechanism, because a long and thus heavy prism that is held at one end applies a large bending force in a direction transversal to the rotation direction on the rotation mechanism. A lack of the necessary stability of the mechanism would lead to unstable rotation, i.e. wobbling of the prism. The wobbling of the prism would vary the direction of the light beam exiting the prism, thus in different positions of the prism, a different intensity portion of the beam would strike the detector, which reduces the measurement accuracy.

Den Boer J. H. W. G. et al. "Spectroscopic rotating compensator ellipsometry in the infrared: retarder design and measurement" (Measurement Science and Technology, IOP, Bristol, GB, vol. 8, no. 5, 1997, pages 484-492) present the advantages of rotating-compensator ellipsometry versus rotating-analyzer ellipsometry. The rotating compensator (retarder) used in the experimental setup disclosed in the article is based on the concept of total internal reflection. The compensator comprises a single prism for providing phase shift between the s and p polarization components via a single total internal reflection, and three gold-plated mirrors for ensuring collinearity between the incident light beam, the outgoing light beam, and the rotation axis of the retarder. The four separate optical components are assembled in an aluminum frame and thus the precision manufacturing and the precision of assembly of the components are critical for the correct operation of the retarder.

Stanislavchuk T N et al. "Synchrotron radiation-based far-infrared spectroscopic ellipsometer with full Mueller-matrix capability" (Review of Scientific Instruments, AIP, Melville, NY, US, vol. 84, no.2, 2013, pages 23901-1 - 23901-15) discloses a spectroscopic ellipsometer for full Mueller-matrix measurement in the far-infrared spectral range. The ellipsometer comprises two rotating compensators of different compensator design for full Mueller-matrix measurement.

U.S. Patent No. 4,917,461 discloses an achromatic infrared retarder. The retarder is assembled from three prisms to provide a retardance of 90° between s and p polarization components in infrared wavelengths (i.e. between 3 and 14 microns) without producing beam deviation.

The article of T. D. Kang et al, entitled "Rotatable broadband retarders for far-infrared spectroscopic ellipsometry" (Thin Solid Films, Elsevier, Amsterdam, NL, vol. 519, no. 9, 2010, pages 2698-2702) presents retarders made of TOPAS plastic and silicon, as well as calculations and measurements on their performance as rotating compensators in the far-infrared wavelengths, more specifically between 100 microns and 666 microns.

The article of J.M Bennett entitled "A Critical Evaluation of Rhomb-Type Quarterwave Retarders" (Applied Optics, vol. 9, no. 9, 1970, pages 2123-2129) presents several retarders and discusses advantages and disadvantages of each.

The paper by R. M. A. Azzam et al. entitled "Silicon-Based Polarization Optics for the 1.30 and 1.55 μm Communication Wavelenths" presents a one-piece inline silicon retarder for use in narrow infrared wavelength-ranges. The retarder utilizes three total internal reflections, wherein the phase shift occurring at one of the total internal reflections is adjusted by a thin dielectric layer.

There is a demand on spectroscopic ellipsometers that are capable quick data acquisition in a wide wavelength range. Quick data acquisition by a rotating-compensator ellipsometer requires compensators that can be stably rotated with a relatively high rotational frequency, e.g. above 5 Hz, while not limiting the available spectral range and preferably also not requiring a particularly robust mechanism. This need is even more prevalent when spectroscopic ellipsometry is combined with scanning imaging spectroscopy, because it requires scanning through the spectral range many times and thus the measurement time is increased drastically.

The objective of the present invention is to eliminate or at least alleviate the drawbacks of the known solutions. Particularly, the objective of the present invention is providing an ellipsometer that is capable of quick data acquisition in a wide spectral range and can be manufactured in a cost-effective manner.

The above objective is achieved by the rotating-compensator ellipsometer according to claim 1. Preferred embodiments of the ellipsometer are described in the dependent claims.

In what follows, preferred embodiments of rotating-compensator ellipsometer according to the invention and the operation thereof are described in detail with reference to the attached drawing, where

- Figure 1 shows an exemplary embodiment of rotating-compensator ellipsometer according to the invention schematically;
- Figure 2 shows an exemplary embodiment of the compensator of the ellipsometer according to the invention in sectional view, with an encasing block thereof;
- Figure 3 shows the compensator of the ellipsometer according to the invention in perspective view, without the encasing block;
- Figure 4 shows the compensator of the ellipsometer according to the invention in a further perspective view, without the encasing block;
- Figures 5A-5C show three different exemplary embodiments of the compensator of the ellipsometer according to the invention together with its encasing block, in longitudinal sectional view on the left and in cross-sectional view on the right;
- Figure 6 shows the compensator of the ellipsometer according to the invention in perspective view, with the encasing block;
- Figure 7 shows the compensator of the ellipsometer according to the invention in perspective view, with the encasing block and its support structure;
- Figure 8 shows the compensator of the ellipsometer according to the invention from the direction of its optical axis, with the encasing block and its support structure;
- Figure 9 shows the compensator of the ellipsometer according to the invention in perspective view, with a rotation mechanism and a light source;
- Figure 10 shows the compensator of the ellipsometer according to the invention in a further perspective view, with the rotation mechanism and the light source;
- Figure 11 shows the compensator of the ellipsometer according to the invention in side view, with the rotation mechanism and the light source;
- Figure 12 shows the compensator of the ellipsometer according to the invention in top view, with the rotation mechanism and the light source.

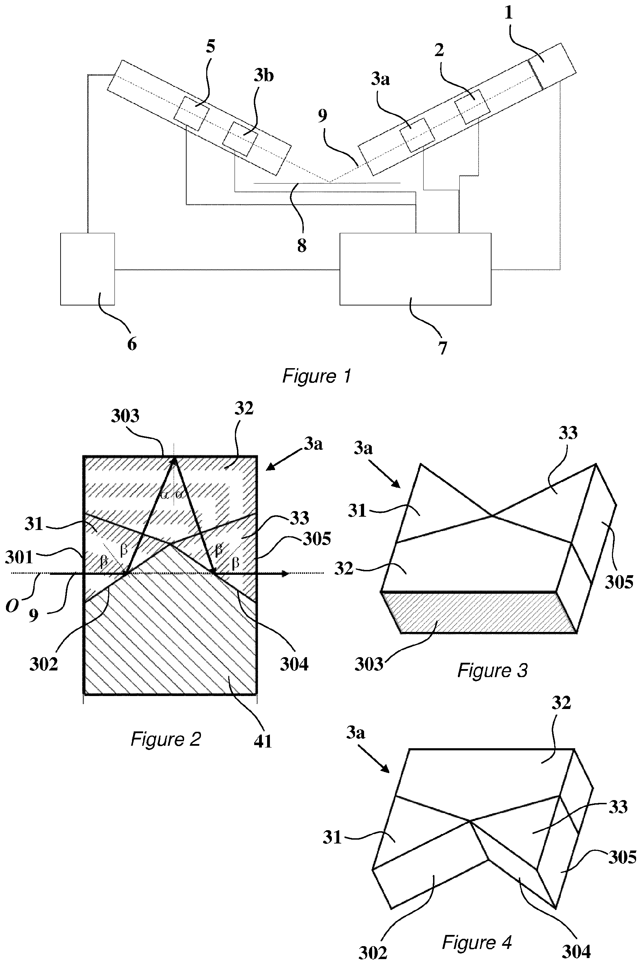

Figure 1 shows an exemplary embodiment of rotating-compensator ellipsometer according to the invention schematically, wherein the ellipsometer comprises a light source 1, a polarizer 2, a rotatable compensator 3a, a further rotatable compensator 3b, an analyzer 5 and a detector 6, which are arranged in the light path of light emitted from the light source 1 in the above order according to the propagation direction of the light, and a control unit 7 operatively connected to at least one of the above elements. The light beam 9 emitted from the light source 1 passes through the polarizer 2 and thus attains a specific polarization state, preferably becomes clearly linearly polarized, then passes through the rotatable compensator 3a, thus its polarization changes according to the momentary orientation of the compensator 3a relative to the polarizer 2, and then strikes a sample 8. The light beam 9, after being reflected from the sample 8, passes through a further rotatable compensator 3b, then passes through the analyzer 5 to arrive at the detector 6. The compensator 3a and the further compensator 3b are rotated at relatively high rotation frequencies, preferably more than 5 Hz, with identical angular velocities, thus the varying light intensity measured by the detector 6 changes according to the change of the polarization state at a frequency that can be derived from the rotation frequency of the compensator 3a. The control unit 7 controls the operation of at least one element operatively connected thereto in a manner known to a person skilled in the art, in accordance with the characteristics of the ellipsometer and settings that can be changed by a user. For example, the control unit 7 may switch the light source 1 on and off, control the rotation of the compensators 3a and optionally the rotation of the polarizer 2 and the analyzer 5. In the embodiment shown in the Figure, the ellipsometer comprises a further compensator 3b in the light path, upstream of the analyzer 5 according to the propagation direction of the light. The presence of this further compensator 3b is preferred, but not necessary, a single compensator 3a is sufficient for the basic operation of the ellipsometer. However, the ellipsometer with two compensators allows measuring Mueller matrices and thus facilitates the study of depolarization phenomena and of anisotropy. The further compensator 3b is preferably identical to the compensator 3a in its material, structure and dimensions, i.e. in substantially every relevant parameter.

Figure 2 shows an exemplary embodiment of the compensator 3a of the ellipsometer according to the invention in longitudinal sectional view, with an encasing block 41 accommodating the compensator 3a. An optical axis $O$ of the compensator 3a is defined by a special line that satisfies the following criteria: a light beam that is coincident with the optical axis $O$ when entering the compensator 3a, passes through the compensator 3a so that the exiting light beam will be coincident with the optical axis $O$, and the optical axis $O$ is in a median plane of the compensator 3a. The longitudinal section shown in Figure 2 is made in said median plane including the optical axis $O$. The compensator 3a is a concave prism (prism optically, but not necessarily a prism geometrically) having a first planar surface 301 perpendicular to the optical axis, a second planar surface 302 forming an angle of $90°-\beta$ with the optical axis $O$, a third planar surface 303 that is perpendicular to the first planar surface 301 and parallel with the optical axis, the third planar surface 303 being provided with a reflective coating, a fourth planar surface 304 forming an angle of $90°-\beta$ with the optical axis $O$, and a fifth planar surface 305 that is parallel with the first planar surface 301 and perpendicular to the third planar surface 303. The prism is arranged in the light path so that the optical axis $O$ of the prism coincides with the entering light beam 9, thus the exiting light beam 9 will also coincide with the optical axis $O$. The light beam 9 enters the prism through the first planar surface 301 perpendicularly, thus refraction does not change the propagation direction of the light beam 9. The light beam 9 propagates along a straight line towards the second planar surface 302, which forms an angle of $90°-\beta$ with the optical axis $O$, i.e. the light beam 9 arrives at the second planar surface 302 with an incidence angle of $\beta$. The angles of the second planar surface 302 and the fourth planar surface 304 formed with the optical axis $O$ is selected so that $\beta$ is larger than 45° and smaller than 65°, and more specifically so that $\beta$ is larger than the critical angle of total internal reflection determined by the material of the prism, particularly by its refractive index, and so that a phase shift of about 45° occurs between the 's' and 'p' polarization components of the light during the total internal reflection with an incidence angle of $\beta$. The second planar surface 302 and the fourth planar surface 304 is not in optical contact with the encasing block 41, e.g. some of the surrounding media, particularly air or vacuum is present in a small gap between said surfaces and the block, thus the light beam 9 incident on said surfaces interact with a prism-material/air interface, and not with the material of the encasing block. Instead of an air gap, a preferably thin dielectric layer, preferably of a solid dielectric material having a low refraction index may be provided at the second and fourth surfaces.

The prism shown in Figure 2 is symmetric to a plane perpendicular to the plane of the Figure, and thus the first planar surface 301 is interchangeable with the fifth planar surface 305 and the second planar surface 302 is interchangeable with the fourth planar surface 304. Each of the first planar surface 301, the second planar surface 302, the third planar surface 303, the fourth planar surface 304 and the fifth planar surface 305 are perpendicular to the median plane of the prism. The optical path through the prism for each light ray entering the prism parallel to and in the proximity of the optical axis $O$ passes through the prism without leaving the plane defined by its interaction with the second planar surface 302. This may also be described as the directions of the incident ray, the surface normal, and the reflected ray for a specific light ray at each of the second planar surface 302, the third planar surface 303 and the fourth planar surface 304 are coplanar, and so is the direction of the incident and refracted beams at the first planar surface 301 and the fifth planar surface 305. When the compensator 3a is formed as a right prism (geometrically) with two parallel bases, the median plane is parallel to the bases thereof and is at equal distances therefrom. When lateral surfaces of the prism are not planar or not parallel, the median plane may be defined as the plane with central position among the planes that include the light paths passing through the prism for light rays that enter the prism parallel to the optical axis $O$, interact with the second, third and fourth planar surfaces and exit the prism parallel to the optical axis $O$.

Determining the extent of phase shift occurring during total internal reflection as a function of the refraction index and the incidence angle is an obvious task to a skilled person. The prism may be made of practically any transparent dielectric material that has a high internal transmittance, i.e. low absorption and low scattering, in the wavelength range to be used in the analysis. The material of the prism is preferably quartz glass, more preferably JGS1 quartz glass that has a high transmittance in the visible, UV and near-infrared wavelengths. For materials having a refractive index around 1,5 (i.e. in the range of about 1,45 to 1,55), the $\beta$ angle is preferably between 45° and 60°, in the case of the prism being made of quartz glass, the $\beta$ angle is preferably about 55°.

The light beam, after being reflected from the second planar surface 302, propagates through the material of the prism and strikes the third planar surface 303 that is provided with a reflective coating, preferably a metallic coating, most preferably an aluminium coating. The reflective coating may also be provided as a multilayer dielectric structure, more specifically as a wideband dielectric mirror. The incidence angle of the light beam at the third planar surface 303 is $\alpha = 2\beta-90°$. Specular re-

flection of the light beam 9 occurs on the third planar surface 303, wherein the phase shift between the 's' and 'p' polarization components of the light due to the reflection on the third planar surface 303 is preferably about 180° in a wide wavelength range. Preferably, the reflective coating also has a high and uniform reflectance in said wavelength range. This may be achieved by e.g. said aluminium layer or another suitably selected reflective material or a suitable dielectric structure, e.g. a broadband dielectric mirror. From the third planar surface 303 the light propagates symmetrically to the fourth planar surface 304, strikes it at an incidence angle of β, undergoes total internal reflection, a further 45° of phase shift occurs between the 's' and 'p' polarization components, and finally the light exits through the fifth planar surface without changing direction, parallel to the optical axis.

The prism described above provides a total of 270° phase shift which is equivalent to a 90° phase shift in the opposite direction, and thus for sake of simplicity is referred to as a 90° phase shift here and from now on. A great advantage of said prism as compared to the arrangement comprising two Fresnel rhombs and other similar prior art solutions is that it achieves 90° phase shift in a significantly smaller space. This has three reasons, firstly, the smaller angle of incidence (i.e. steeper incidence) causes larger phase shift at each total internal reflection - exactly twice as much as the Fresnel rhomb arrangement - and thus fewer total internal reflections are required, and secondly, the smaller angle of incidence (i.e. steeper incidence) also results in a greater change in the direction of propagation of light and thus the same number of reflections could be provided in a prism that is shorter along the optical axis O, and thirdly, one less reflection has to be accommodated within the prism.

Figures 3 and 4 show two different perspective views of the compensator 3a shown in Figure 2, without the encasing block 41.

In the embodiment shown in Figures 2 to 4, the compensator 3a is formed from three pieces, among which the first piece 31 and the third piece 33 are two identical triangular-based right prisms, with their base triangles having interior angles of 55°, 55° and 70°, and a second piece 32 that is a symmetric pentagonal-based right prism, with its interior angles being 90°, 90°, 110°, 140° and 110°. The contacting surfaces of the prisms are in optical contact bonding or are bound together with a binding material. A complex prism formed with the angles specified above has the advantage that light passes through the common boundary surfaces of the prisms perpendicularly, which minimizes the occurrence of any undesired optical phenomena. The prisms in this exemplary embodiment are of identical height and their corresponding bases lie in the same planes, and thus said bases form together two bases of the prism that are of concave pentagonal shape, these are two lateral surfaces when viewed from the direction of the optical axis O.

Naturally, the prism may be formed in a different manner, e.g. portions outside the optical path, especially the corners may be cut off, i.e. trapezoid-based prisms may be used instead of triangle-based ones or alternatively the second piece 32 may be a pentagonal-based prism with its top corners (according to the orientation of Figures 2 and 4) being closer to each other and not being right-angled, or alternatively the second piece 32 may also be a triangular-based right prism. Furthermore, the prism may be manufactured from a single piece, two pieces or any other number of pieces, the aforementioned three-piece example is merely a preferred embodiment due to its relative simplicity and cost-efficiency.

It is hereby noted, that none of the bases of said prisms interact with the light beam 9 and thus the optical and geometric properties of these surfaces are not relevant, they may be identical to each other or different; parallel or not; planar, curved or irregular; or polished or mat. The above described configuration, where the bases of each prism are flat and parallel is preferred due to manufacturing considerations. The main inventive idea behind the invention is that a shorter compensator 3a with 90° can be produced by selecting the angles of surfaces and materials of the prism and of the coating so as to produce two relatively steep total internal reflections with phase shifts of about 45° each and one reflection with about 180° phase shift. Furthermore, a shorter compensator 3a is inherently more stable during rotation and thus allows the use of less robust rotation assembly at higher rotation frequencies, thereby making measurements quicker and/or the ellipsometer cheaper.

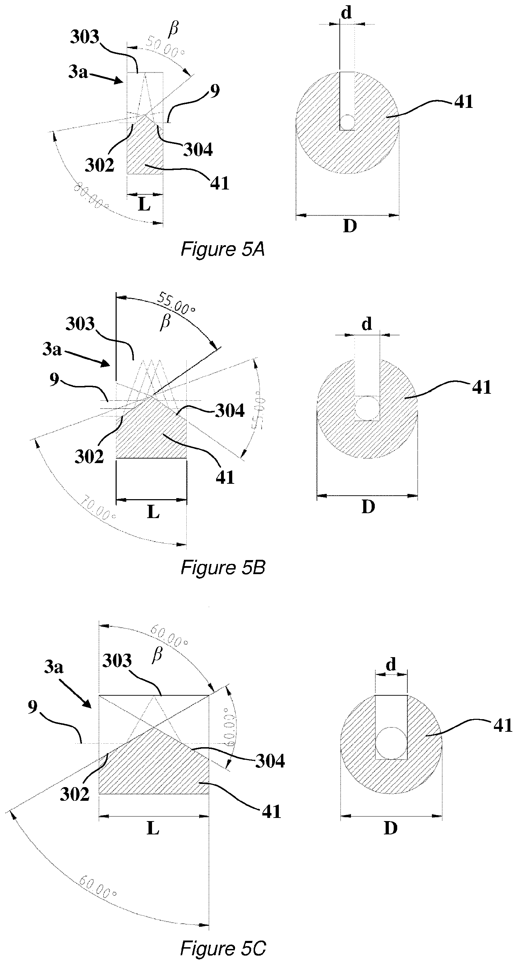

Figures 5A-5C show three different exemplary embodiments of the compensator 3a of the ellipsometer according to the invention with the encasing block 41 in longitudinal sectional view on the left and in cross-sectional view on the right. These Figures show the differences in the geometry of the compensator 3a caused by choosing slightly different β angles. Figure 5A shows an embodiment, where β is 50°, Figure 5B shows an embodiment, where β is 55°, which is identical to the embodiment shown in Figures 2-4, and Figure 5C shows an embodiment, where β is 60°. An optical system usually utilizes sockets of the same size, usually corresponding to a standard, most often being 1 inch, i.e. about 25.4 mm. Thus, a diameter D of the encasing block 41 is preferably chosen according to this standard size for the sake of compatibility with other optical elements. Increasing the β angle requires increasing the length L of the prism to accommodate the light path which inevitably becomes longer due to the shallower first reflection. Smaller β angle on the other hand allows smaller prism lengths. While affecting the length of the prism, the value of the β angle also affects the useful diameter d of a prism of specific dimensions. Useful diameter d is defined by the largest diameter of a beam that can completely pass through the prism so that the incident beam interacts with the second planar surface 302, the third planar surface 303 and the fourth planar surface 304 and thus attains the sought phase shift, the incident beam and the outbound beam has the same diameter and both being parallel to the optical axis and. The length L of each compensator shown in Figures 5A-5C is selected to maximize the useful diameter for the specific β angles. Otherwise, the length L is ought to be as low as possible for increased rotational stability, but have to be larger than the minimum length determined by the β angle at least by an amount that allows the use of meaningful beam diameters. A β angle of about 55° provides a prism with relatively low length L and relatively large useful diameter d relative to the a specific D encasing diameter, while also producing a phase shift close to the ideal 90° in a wide wavelength range when the prism is made of quartz glass and the reflective coating on the third planar surface 303 is an aluminium coating. While a β angle in the range of 50° to 60° is preferred for geometric reasons, any β angle larger than 45° and smaller than 65° may also be used within the scope of the present invention, especially when a different choice of materials provides phase shift close to 90° at such an angle.

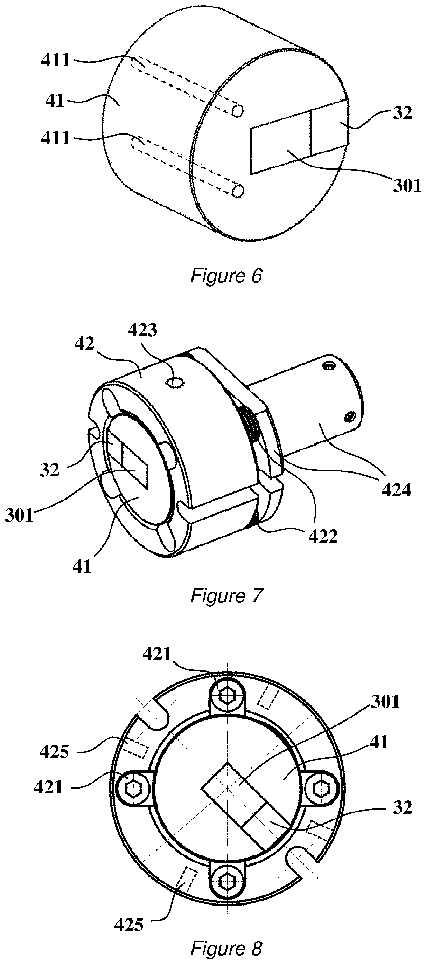

Figure 6 shows the compensator 3a together with the encasing block 41 accommodating the compensator 3a in perspective view. The encasing block 41 is preferably made of a light metal, more preferably aluminium, and thus its density is e.g. about 2.7 g/cm$^3$, which is relatively close to the density of the prism, which is about 2.2 g/cm$^3$ in the case of quartz glass. The relatively low difference in density allows relatively simple manufacturing of the encasing block 41 from a cylindrical block of material, e.g. a groove is cut for receiving the compensator 3a and one or more lightening holes 411 are provided at one or more opposing locations. The lightening holes 411 are arranged and sized so that the center of mass of the compensator 3a together with the encasing block 41 lies on the optical axis O of the prism, which is coincident with the geometric axis of the cylindrical block. Naturally, the prism may be suitably held by a fixture other than described above, however, coincidence of the optical axis O with the axis of rotation is important for correct operation and thus the fixture shall be arranged to facilitate this alignment, furthermore it is highly preferred for the center of mass of the whole rotating part to be on the rotation axis.

Figures 7 and 8 show an exemplary embodiment of the compensator 3a of the ellipsometer according to the invention, together with the encasing block 41 and its support structure, in perspective view and axial view. A support member 424 is fixedly secured to a rotor of a motor. The support member 424 comprises threaded holes extending in axial direction and cooperating with threaded ends of optical axis adjusting screws 421. The encasing block 41 is arranged in a holding sleeve 42, which is preferably cylindrical and is preferably provided with a threaded radial hole 423. The encasing block 41 placed into the sleeve 42 may be secured to the sleeve 42 by a screw driven into the radial threaded hole 423. The optical axis adjusting screws 421 are passed through axial holes of the holding sleeve 42, their heads abut on a portion of the holding sleeve 42, and their threaded ends operatively engage threaded holes of the support member 424 such that each of the optical axis adjusting screws 421 are able to pull a corresponding part of the holding sleeve 42 toward the support member 424. Thus the optical axis O of the compensator 3a encased in the encasing block 41 held in the holding sleeve 42 may be tilted relative to the rotor of the driving motor and thus relative to the rotation axis. Support springs 422 are arranged between the holding sleeve 42 and the support member 424. Said support springs 422 push the holding sleeve 42 toward the heads of the optical axis adjusting screws 421 and thus via their resilience, they allow slight tilting of the holding sleeve 42 relative to the support member 424. The support springs 422 are preferably plate springs. The holding sleeve 42 is optionally provided with threaded centering holes 425. Screws, e.g. grub screws are inserted into the centering holes 425. By driving said screws in and out, the mass distribution of the rotating part may be fine-tuned so that its center of mass lies precisely on the rotation axis for making its rotation more stable. Figure 7 shows two pairs of radial centering holes 425, however, the number and arrangement of said centering holes 425 may be different.

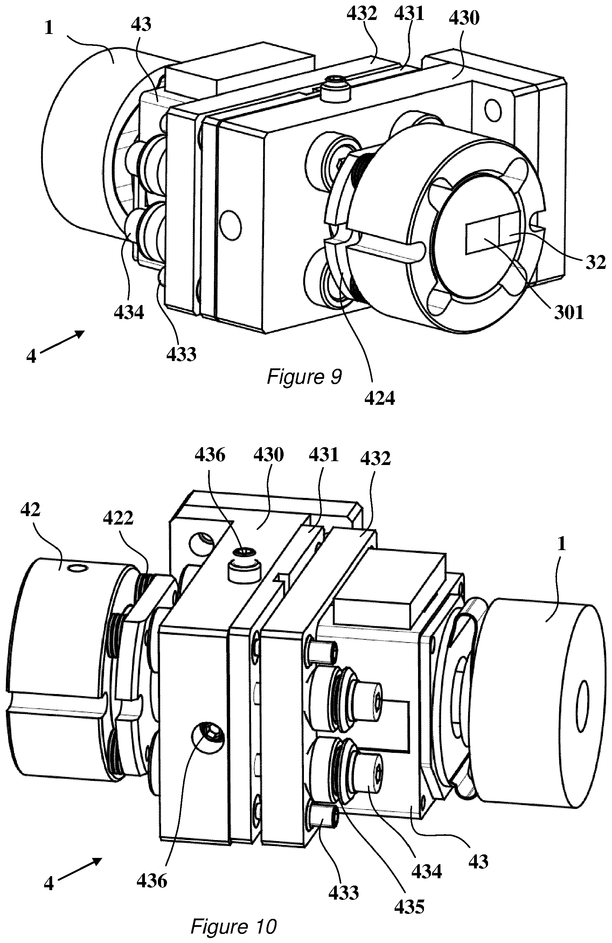

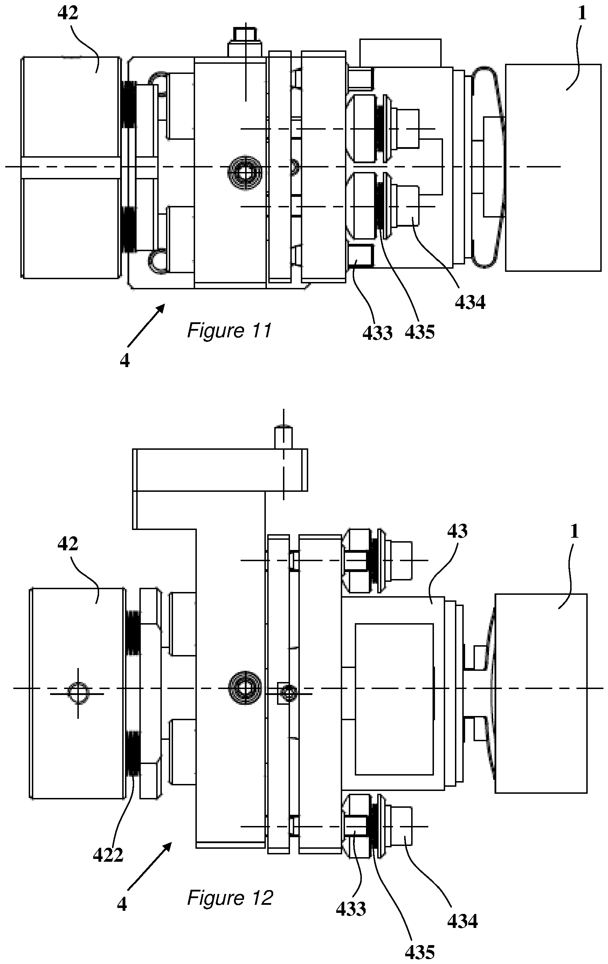

Figures 9-12 show the compensator 3a of the ellipsometer according to the invention in a preferred exemplary embodiment, mounted on a supporting and rotating assembly 4, together with the light source 1, in two perspective views, in a side view and in top view, respectively. The terms "side view" and "top view" merely refer to the relative orientations of the drawings and do not necessarily correspond to actual spatial orientations when the ellipsometer is in use. The supporting and rotating assembly 4 is fixedly secured to a corresponding part of the ellipsometer, e.g. to a fixed or movable arm, via a fixing member 430 of the supporting and rotating assembly 4. A first holding member 431 is attached to the fixing member 430 such that it can be translated in two directions substantially perpendicular to the optical axis O via lateral adjusting screws 436. The first holding member 431 is connected to a second holding member 432 via holding screws 434 and rotation axis adjusting screws 433 so that the heads of the holding screws 434 push the second holding member 432 toward the first holding member 431 via interposed support springs 435. The second holding member 432 may be moved closer to and farther away from the first holding member by rotation axis adjusting screws 433 at corresponding locations, preferably close to its perimeter, and thus the support springs 435 are compressed or relaxed according to the geometric constraints. A housing of the driving motor 43 is fixedly secured to the second holding member 432 and the light source 1 is fixedly secured to the motor housing, thus the rotor of the motor, the rotation axis and the direction of the light beam 9 emitted by the light source 1 may all be tilted together by the tilting of the second holding member 432, and can also be translated perpendicularly to the light path.

The compensator 3a of the ellipsometer may be preferably calibrated using the supporting and rotating assembly 4 described above via the following steps:

1) The compensator 3a is adjusted using the optical axis adjusting screws 421 so that the entry- and exit surface of the prism are perpendicular to rotation axis. This is carried out by sending a collimated light beam (preferably a laser beam) onto the entry surface of the prism rotated by a motor and the reflected light beam is examined on a screen, e.g. a wall that is in a distance of a few meters. If the prism is misaligned, the end point of the beam on the screen will move along a circle. The optical axis adjusting screws 421 should be used to adjust the prism until said circle reduced to a point.

2) Rough adjustment of the rotation axis: adjusting the tilt of the rotation axis by using the rotation angle adjusting screws 433 until the light beam reflected toward the light source from the entry surface of the prism is aligned with the incident beam.

3) Fine adjustment of the rotation axis: maximizing the intensity measured on the detector of the ellipsometer which is associated with the center of the beam, and optimizing other ellipsometric parameters in a straight line configuration, i.e. nearing them to their ideal theoretical values.

4) Translation of the rotation axis by using the lateral adjusting screws 436 thus optimizing the intensity and other ellipsometric parameters.

5) Repeating steps 3) and 4) as necessary, until the desired precision is achieved.

List of reference numbers:

O optical axis;
1 light source;
2 polarizer;
3a, 3b compensator;
31 first piece;
32 second piece;
33 third piece;
301 first planar surface;
302 second planar surface;
303 third planar surface;
304 fourth planar surface;
305 fifth planar surface;
4 supporting and rotating assembly;
41 encasing block;
411 lightening holes;
42 holding sleeve;
421 optical axis adjusting screws;
422 support screws;
423 threaded radial hole;
424 support member;
425 centering holes;
43 motor housing;
430 fixing member;
431 first holding member;
432 second holding member;
433 rotation axis adjusting screws;
434 holding screws;
435 support springs;
436 lateral adjusting screws;
5 analyzer;
6 detector;
7 control unit;
8 sample;
9 light beam.

**Claims**

1. Rotating-compensator ellipsometer, comprising the following elements in the light path in this order according to the propagation direction of light:

a light source (1);
a polarizer (2);
a compensator (3a) with an optical axis (O), arranged in a supporting and rotating assembly (4);
an analyzer (5);
a detector (6),

wherein the rotating-compensator ellipsometer further comprises a control unit (7) that is operably connected to at least one of the above elements,
**characterized in that** the compensator (3a) is a concave prism, having at least five planar surfaces that are perpendicular to a median plane of the prism, said median plane including the optical axis (O), wherein

a first planar surface (301) of the prism is perpendicular to the optical axis (O);
a second planar surface (302) of the prism forms an angle of 90°-β with the optical axis (O);
a third planar surface (303) of the prism is parallel to the optical axis (O), is perpendicular to the first planar surface (301) and is provided with a reflective coating;
a fourth planar surface (304) of the prism forms an angle of 90°-β with the optical axis (O);
a fifth planar surface (305) of the prism is parallel to the first planar surface (301) and

is perpendicular to the third planar surface (303), and
wherein 45° < β < 65°,
the compensator (3a) being arranged in the light path to generate an effective 90° phase shift between s and p polarization components of light emitted by said light source (1) by means of two total internal reflections and a further specular reflection.

2. The rotating-compensator ellipsometer according to claim 1, **characterized in that**

$$50° < \beta < 60°.$$

3. The rotating-compensator ellipsometer according to any one of claims 1 or 2, **characterized in that** $\beta \approx$ 55°.

4. The rotating-compensator ellipsometer according to any one of claims 1 to 3, **characterized in that** the reflective coating on the third planar surface (303) is a metallic coating.

5. The rotating-compensator ellipsometer according to any one of claims 1 to 4, **characterized in that** the reflective coating on the third planar surface (303) is an aluminium coating.

6. The rotating-compensator ellipsometer according to any one of claims 1 to 5, **characterized in that** the material of the prism is quartz glass.

7. The rotating-compensator ellipsometer according to any one of claims 1 to 6, **characterized in that** the prism consists of three pieces, wherein

> a first piece (31) is a triangular-based right prism having a triangular base with interior angles of 55°, 55° and 70°;
> a second piece (32) is a pentagonal-based right prism having a pentagonal base with interior angles of 90°, 90°, 110°, 140° and 110°;
> a third piece (33) is a triangular-based right prism having a triangular base with interior angles of 55°, 55° and 70°.

8. The rotating-compensator ellipsometer according to any one of claims 1 to 7, **characterized in that** the supporting and rotating assembly (4) comprises:

> an encasing block (41) for receiving the compensator (3a);
> a holding sleeve (42) for holding the encasing block (41);
> a motor;

a support member (424) fixedly secured to a rotor of the motor;
optical axis adjusting screws (421) connecting the support member (424) and the holding sleeve (42) to each other, wherein the support member (424) and the holding sleeve (42) are movable toward each other and away from each other by said optical axis adjusting screws (421);
fixing member (430) for fixing the supporting and rotating assembly (4) to a corresponding part of the ellipsometer;
a first holding member (431) connected to the fixing member (430) via lateral adjusting screws (436) configured for translation of the first holding member (431) relative to the fixing member (430);
a second holding member (432) connected to the first holding member (431) via holding screws (434) and rotation axis adjusting screws (433), wherein the rotation axis adjusting screws (433) are configured for moving the first holding member (431) and the second holding member (432) toward each other and away from each other.

9. The rotating-compensator ellipsometer according to claim 8, **characterized in that** the encasing block (41) includes lightening holes (411) and the holding sleeve (42) comprises threaded centering holes (425), wherein movable grub screws are arranged in the centering holes (425).

10. The rotating-compensator ellipsometer according to any one of claims 1 to 9, **characterized by** comprising a further rotatable compensator (3b) directly before the analyzer (5) according to the propagation direction of light, wherein preferably substantially every parameter of the further compensator (3b) is identical to those of the compensator (3a) and is arranged in a supporting and rotating assembly (4) identical to that of the compensator (3a).

**Patentansprüche**

1. Ellipsometer mit rotierendem Kompensator, umfassend die folgenden Elemente in dem Lichtpfad, in dieser Reihenfolge gemäß der Ausbreitungsrichtung von Licht:

> eine Lichtquelle (1);
> einen Polarisator (2);
> einen Kompensator (3a) mit einer optischen Achse (O), der in einer stützenden und rotierenden Baugruppe (4) eingerichtet ist;
> einen Analysator (5);
> einen Detektor (6),
> wobei das Ellipsometer mit rotierendem Kompensator weiter eine Steuereinheit (7) umfasst, die betriebsfähig mit zumindest einem der obigen Elemente verbunden ist, **dadurch gekennzeichnet, dass** der Kompensator (3a) ein konkaves Prisma ist, das zumindest fünf planare Oberflächen aufweist, die zu einer Medianebene des Prismas senkrecht sind, wobei die Medianebene die optische Achse (O) beinhaltet, wobei

eine erste planare Oberfläche (301) des Prismas senkrecht zu der optischen Achse (O) ist;

eine zweite planare Oberfläche (302) des Prismas einen Winkel von 90°- β mit der optischen Achse (O) bildet;

eine dritte planare Oberfläche (303) des Prismas parallel zu der optischen Achse (O) ist, senkrecht zu der ersten planaren Oberfläche (301) ist und mit einer reflektierenden Beschichtung versehen ist;

eine vierte planare Oberfläche (304) des Prismas einen Winkel von 90°- β mit der optischen Achse (O) bildet;

eine fünfte planare Oberfläche (305) des Prismas parallel zu der ersten planaren Oberfläche (301) ist und

senkrecht zu der dritten planaren Oberfläche (303) ist, und

wobei 45° < β < 65°,

wobei der Kompensator (3a) in dem Lichtpfad eingerichtet ist, um eine effektive 90°-Phasenverschiebung zwischen s- und p-Polarisationskomponenten von Licht, das von der Lichtquelle (1) ausgestrahlt wird, mittels zwei Totalreflexionen und einer weiteren Spiegelreflexion zu erzeugen.

2. Ellipsometer mit rotierendem Kompensator nach Anspruch 1, **dadurch gekennzeichnet, dass** 50° < β < 60°.

3. Ellipsometer mit rotierendem Kompensator nach einem der Ansprüche 1 oder 2, **dadurch gekennzeichnet, dass** β ≈ 55°.

4. Ellipsometer mit rotierendem Kompensator nach einem der Ansprüche 1 bis 3, **dadurch gekennzeichnet, dass** die reflektierende Beschichtung auf der dritten planaren Oberfläche (303) eine metallische Beschichtung ist.

5. Ellipsometer mit rotierendem Kompensator nach einem der Ansprüche 1 bis 4, **dadurch gekennzeichnet, dass** die reflektierende Beschichtung auf der dritten planaren Oberfläche (303) eine Aluminiumbeschichtung ist.

6. Ellipsometer mit rotierendem Kompensator nach einem der Ansprüche 1 bis 5, **dadurch gekennzeich-**

**net, dass** das Material des Prismas Quarzglas ist.

7. Ellipsometer mit rotierendem Kompensator nach einem der Ansprüche 1 bis 6, **dadurch gekennzeichnet, dass** das Prisma aus drei Teilen besteht, wobei

ein erstes Teil (31) ein auf Dreiecken basiertes gerades Prisma ist, das eine dreieckige Basis mit Innenwinkeln von 55°, 55° und 70° aufweist;
ein zweites Teil (32) ein auf Fünfecken basiertes gerades Prisma ist, das eine fünfeckige Basis mit Innenwinkeln von 90°, 90°, 110°, 140° und 110° aufweist;
ein drittes Teil (33) ein auf Dreiecken basiertes gerades Prisma ist, das eine dreieckige Basis mit Innenwinkeln von 55°, 55° und 70° aufweist.

8. Ellipsometer mit rotierendem Kompensator nach einem der Ansprüche 1 bis 7, **dadurch gekennzeichnet, dass** die stützende und rotierende Baugruppe (4) Folgendes umfasst:

einen Gehäuseblock (41), um den Kompensator (3a) aufzunehmen;
einen Halterungsmantel (42), um den Gehäuseblock (41) zu halten;
einen Motor;
ein Stützbauteil (424), das fest an einem Rotor des Motors befestigt ist;
optische Achseinstellschrauben (421), die das Stützbauteil (424) und den Halterungsmantel (42) miteinander verbinden, wobei das Stützbauteil (424) und der Halterungsmantel (42) durch die optischen Achseinstellschrauben (421) aufeinander zu und voneinander weg bewegbar sind;
Fixierbauteil (430) zum Fixieren der stützenden und rotierenden Baugruppe (4) an einem entsprechenden Teil des Ellipsometers;
ein erstes Halterungsbauteil (431), das mit dem Fixierbauteil (430) über seitliche Einstellschrauben (436) verbunden ist, die zur Translation des ersten Halterungsbauteils (431) relativ zu dem Fixierbauteil (430) ausgelegt sind;
ein zweites Halterungsbauteil (432), das mit dem ersten Halterungsbauteil (431) über Halterungsschrauben (434) und Rotationsachseneinstellschrauben (433) verbunden ist, wobei die Rotationsachseneinstellschrauben (433) dazu ausgelegt sind, das erste Halterungsbauteil (431) und das zweite Halterungsbauteil (432) aufeinander zu und voneinander weg zu bewegen.

9. Ellipsometer mit rotierendem Kompensator nach Anspruch 8, **dadurch gekennzeichnet, dass** der Gehäuseblock (41) Belichtungslöcher (411) beinhaltet und der Halterungsmantel (42) Gewindezentrierlöcher (425) umfasst, wobei bewegliche Madenschrauben in den Zentrierlöchern (425) eingerichtet sind.

10. Ellipsometer mit rotierendem Kompensator nach einem der Ansprüche 1 bis 9, **dadurch gekennzeichnet, dass** es einen weiteren rotierbaren Kompensator (3b) direkt vor dem Analysator (5) gemäß der Ausbreitungsrichtung von Licht umfasst, wobei bevorzugt im Wesentlichen jeder Parameter des weiteren Kompensators (3b) mit jenen des Kompensators (3a) identisch ist und er in einer stützenden und rotierenden Baugruppe (4) eingerichtet ist, die mit der des Kompensators (3a) identisch ist.

## Revendications

1. Ellipsomètre à compensateur rotatif, comprenant les éléments suivants dans le trajet de lumière dans cet ordre selon la direction de propagation de la lumière :

> une source de lumière (1) ;
> un polariseur (2) ;
> un compensateur (3a) présentant un axe optique (O), agencé dans un ensemble de support et de rotation (4) ;
> un analyseur (5) ;
> un détecteur (6),
> dans lequel l'ellipsomètre à compensateur rotatif comprend en outre une unité de commande (7) qui est connectée de manière fonctionnelle à au moins l'un des éléments ci-dessus,
> **caractérisé en ce que** le compensateur (3a) est un prisme concave, présentant au moins cinq surfaces planes qui sont perpendiculaires à un plan médian du prisme, ledit plan médian incluant l'axe optique (O), dans lequel
> une première surface plane (301) du prisme est perpendiculaire à l'axe optique (O) ;
> une deuxième surface plane (302) du prisme forme un angle de 90°-β avec l'axe optique (O) ;
> une troisième surface plane (303) du prisme est parallèle à l'axe optique (O), est perpendiculaire à la première surface plane (301) et est pourvue d'un revêtement réfléchissant ;
> une quatrième surface plane (304) du prisme forme un angle de 90°-β avec l'axe optique (O) ;
> une cinquième surface plane (305) du prisme est parallèle à la première surface plane (301) et et est perpendiculaire à la troisième surface plane (303), et
> dans lequel 45° < β < 65°,
> le compensateur (3a) étant agencé dans le trajet de lumière pour générer un déphasage effectif de 90° entre les composantes de polarisation s et p de la lumière émise par ladite source de lumière (1) au moyen de deux réflexions internes totales et d'une réflexion spéculaire supplémentaire.

2. Ellipsomètre à compensateur rotatif selon la revendication 1, **caractérisé en ce que** 50° < β < 60°.

3. Ellipsomètre à compensateur rotatif selon l'une quelconque des revendications 1 ou 2, **caractérisé en ce que** β ≈ 55°.

4. Ellipsomètre à compensateur rotatif selon l'une quelconque des revendications 1 à 3, **caractérisé en ce que** le revêtement réfléchissant sur la troisième surface plane (303) est un revêtement métallique.

5. Ellipsomètre à compensateur rotatif selon l'une quelconque des revendications 1 à 4, **caractérisé en ce que** le revêtement réfléchissant sur la troisième surface plane (303) est un revêtement en aluminium.

6. Ellipsomètre à compensateur rotatif selon l'une quelconque des revendications 1 à 5, **caractérisé en ce que** le matériau du prisme est un verre de quartz.

7. Ellipsomètre à compensateur rotatif selon l'une quelconque des revendications 1 à 5, **caractérisé en ce que** le prisme est constitué de trois pièces, dans lequel

> une première pièce (31) est un prisme droit à base triangulaire présentant une base triangulaire avec des angles intérieurs de 55°, 55° et 70° ;
> une deuxième pièce (32) est un prisme droit à base pentagonale présentant une base pentagonale avec des angles intérieurs de 90°, 90°, 110°, 140° et 110° ;
> une troisième pièce (33) est un prisme droit à base triangulaire présentant une base triangulaire avec des angles intérieurs de 55°, 55° et 70°.

8. Ellipsomètre à compensateur rotatif selon l'une quelconque des revendications 1 à 7, **caractérisé en ce que** l'ensemble de support et de rotation (4) comprend :

> un bloc d'enveloppe (41) pour recevoir le compensateur (3a) ;
> un manchon de maintien (42) pour maintenir le bloc d'enveloppe (41) ;
> un moteur ;
> un élément de support (424) solidement fixé à un rotor du moteur ;
> des vis de réglage d'axe optique (421) reliant l'élément de support (424) et le manchon de maintien (42) l'un à l'autre, dans lequel l'élément de support (424) et le manchon de maintien (42) peuvent se rapprocher l'un de l'autre et s'éloigner l'un de l'autre au moyen desdites vis de réglage d'axe optique (421) ;

un élément de fixation (430) pour fixer l'ensemble de support et de rotation (4) à une partie correspondante de l'ellipsomètre ;

un premier élément de maintien (431) relié à l'élément de fixation (430) via des vis de réglage latéral (436) configurées pour la translation du premier élément de maintien (431) par rapport à l'élément de fixation (430) ;

un second élément de maintien (432) relié au premier élément de maintien (431) via des vis de maintien (434) et des vis de réglage d'axe de rotation (433), dans lequel les vis de réglage d'axe de rotation (433) sont configurées pour déplacer le premier élément de maintien (431) et le second élément de maintien (432) l'un vers l'autre et les éloigner l'un de l'autre.

9. Ellipsomètre à compensateur rotatif selon la revendication 8, **caractérisé en ce que** le bloc d'enveloppe (41) inclut des trous d'allègement (411) et le manchon de maintien (42) comprend des trous de centrage (425) filetés, dans lequel des vis sans tête mobiles sont agencées dans les trous de centrage (425).

10. Ellipsomètre à compensateur rotatif selon l'une quelconque des revendications 1 à 9, **caractérisé en ce qu'**il comprend un compensateur rotatif (3b) supplémentaire directement avant l'analyseur (5) selon la direction de propagation de la lumière, dans lequel de préférence sensiblement tous les paramètres du compensateur (3b) supplémentaire sont identiques à ceux du compensateur (3a) et est agencé dans un ensemble de support et de rotation (4) identique à celui du compensateur (3a).

*Figure 1*

*Figure 2*

*Figure 3*

*Figure 4*

Figure 5A

Figure 5B

Figure 5C

Figure 6

Figure 7

Figure 8

Figure 9

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9404872 B
- US 7298480 B
- US 4917461 A

### Non-patent literature cited in the description

- Spectroscopic rotating compensator ellipsometry in the infrared: retarder design and measurement. **BOER J. H. W. G. et al.** Measurement Science and Technology. IOP, 1997, vol. 8, 484-492
- Synchrotron radiation-based far-infrared spectroscopic ellipsometer with full Mueller-matrix capability. **STANISLAVCHUK T N et al.** Review of Scientific Instruments. AIP, 2013, vol. 84, 23901-1, 23901-15
- Rotatable broadband retarders for far-infrared spectroscopic ellipsometry. **T. D. KANG et al.** Thin Solid Films. Elsevier, 2010, vol. 519, 2698-2702
- **J.M BENNETT.** A Critical Evaluation of Rhomb-Type Quarterwave Retarders. *Applied Optics,* 1970, vol. 9 (9), 2123-2129
- **R. M. A. AZZAM et al.** *Silicon-Based Polarization Optics for the 1.30 and 1.55 $\mu$m Communication Wavelenths*